(19) Europäisches Patentamt
European Patent Office
Office européen des brevets

(11) **EP 4 664 157 A1**

(12) **EUROPEAN PATENT APPLICATION**
published in accordance with Art. 153(4) EPC

(43) Date of publication:
**17.12.2025 Bulletin 2025/51**

(21) Application number: **23924577.2**

(22) Date of filing: **28.02.2023**

(51) International Patent Classification (IPC):
*G01S 13/89* (2006.01)   *G01S 13/56* (2006.01)

(52) Cooperative Patent Classification (CPC):
**G01S 13/56; G01S 13/89**

(86) International application number:
**PCT/CN2023/078706**

(87) International publication number:
**WO 2024/178603 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.
Shenzhen, Guangdong 518110 (CN)**

(72) Inventors:
• **LIU, Zhiyang**
  **Shenzhen, Guangdong 518129 (CN)**
• **QIANG, Bo**
  **Shenzhen, Guangdong 518129 (CN)**
• **CHENG, Zhiwen**
  **Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **OCCUPANCY GRID MAP GENERATION METHOD AND APPARATUS**

(57)     Embodiments of this application provide an occupied grid map generation method and apparatus, to improve accuracy of a generated occupied grid map OGM, and improve safety of autonomous driving. In this method, energy information corresponding to each location grid in space is determined based on a radar echo signal, to obtain real spatial energy distribution. An occupation probability corresponding to each location grid in the space may be determined based on energy distribution, to determine a measured OGM of a current frame, and then an OGM of the current frame is jointly determined with reference to a predicted OGM of the current frame that is obtained through prediction based on an OGM of a previous frame. In comparison with a conventional manner in which an energy point is extracted and an energy point occupation probability is fitted by using a mathematical model, in the solutions of this application, an occupation probability is directly determined based on continuous energy distribution in entire space, to avoid a problem that the occupation probability fitted by using the mathematical model is inaccurate. This improves accuracy of a generated OGM.

```
┌─────────────────────────────────────────────────────────┐
│   Receive a radar echo signal of a vehicle in a current  │  501
│                        frame                             │
└─────────────────────────────────────────────────────────┘

┌─────────────────────────────────────────────────────────┐
│     Obtain a first spectrum based on the radar echo      │  502
│                        signal                            │
└─────────────────────────────────────────────────────────┘

┌─────────────────────────────────────────────────────────┐
│ Determine, based on first energy information corresponding│
│ to each piece of first location information in the first  │  503
│ spectrum, an occupation probability of a spatial location │
│ grid indicated by each piece of first location           │
│ information, to obtain a measured OGM of the current frame│
└─────────────────────────────────────────────────────────┘

┌─────────────────────────────────────────────────────────┐
│ Determine a predicted OGM of the current frame based on  │
│ pose data and movement information of the vehicle and an  │  504
│ OGM of a previous frame of the current frame             │
└─────────────────────────────────────────────────────────┘

┌─────────────────────────────────────────────────────────┐
│ Correct the predicted OGM of the current frame based on  │
│ the measured OGM of the current frame, to obtain an OGM   │  505
│ of the current frame                                     │
└─────────────────────────────────────────────────────────┘
```

FIG. 5

**Description**

<u>TECHNICAL FIELD</u>

This application relates to the field of intelligent driving technologies, and in particular, to an occupied grid map generation method and apparatus.

<u>BACKGROUND</u>

An occupied grid map (occupied grid map, OGM) is an important part of static obstacle sensing and road scenario understanding in autonomous driving/assisted driving technologies. The OGM includes occupation information of an object in three-dimensional space of a road, the space is divided into a plurality of grids, and a value of each grid indicates whether the grid is occupied by an object. The OGM can be used to implement road edge detection and static obstacle positioning, to obtain a passable area of a vehicle, and ensure traveling safety of an autonomous vehicle.

In a process of generating the OGM, a mathematical model like a Gaussian distribution model is usually used to predict an occupation probability of each grid obtained through division. When Gaussian distribution is used to predict an occupation probability of a small point target, predicted probability distribution is relatively consistent with an actual occupation probability of the point. However, when the Gaussian distribution is used to predict an occupation probability of a large-sized target (referred to as an extended target for short below), because a Gaussian distribution curve is inconsistent with actual probability distribution of the extended target, a result of predicting the occupation probability of the extended target by using the Gaussian distribution model is inaccurate. Inaccurate probability prediction directly reduces accuracy of the generated OGM, thereby reducing safety of autonomous driving.

<u>SUMMARY</u>

Embodiments of this application provide an occupied grid map generation method and apparatus, to improve accuracy of an OGM and improve safety of autonomous driving.

According to a first aspect, this application provides an occupied grid map generation method. The method is applied to a vehicle or a module in a vehicle, and includes: receiving a radar echo signal of the vehicle in a current frame; obtaining a first spectrum based on the radar echo signal, where the first spectrum is used to describe a correspondence between first location information and first energy information that are of spatial location grids of an echo, and the first location information includes a velocity, a range, and an angle; determining, based on first energy information corresponding to each piece of first location information in the first spectrum, an occupation probability of a spatial location grid indicated by each piece of first location information, to obtain a measured occupied grid map OGM of the current frame, where any one of the spatial location grids corresponds to at least one grid in the measured OGM; determining a predicted OGM of the current frame based on pose data and movement information of the vehicle and an OGM of a previous frame of the current frame; and correcting the predicted OGM of the current frame based on the measured OGM of the current frame to obtain an OGM of the current frame.

In a conventional OGM generation method, an energy point in space is extracted based on energy of a spatial echo, and an occupation probability of the energy point is obtained through fitting by using a mathematical model. However, because effect of fitting an occupation probability of a sized extended target by using a mathematical model is not ideal, in the solutions of this application, an energy point is no longer extracted, but location information and energy information of each spatial location grid are directly determined based on a radar echo signal. In this way, real continuous energy distribution in space can be reflected. Further, a grid in an OGM corresponding to each location grid is determined based on the location information of each location grid, and a value of the corresponding grid is determined based on the energy information of each location grid. Therefore, in comparison with a conventional method, this can improve accuracy of the generated OGM and improve safety of autonomous driving.

In some embodiments, obtaining the first spectrum based on the radar echo signal includes: performing Fourier transformation on the radar echo signal to obtain a second spectrum, where the second spectrum is used to describe a correspondence between second location information and the first energy information that are of the spatial location grids of the echo, and the second location information includes the velocity and the range; and performing direction of arrival DOA estimation on the second spectrum to obtain the first spectrum.

In some embodiments, performing DOA estimation on the second spectrum to obtain the angle included in the first spectrum includes: adjusting an initial angle N times to obtain the angle included in the first spectrum, where an $i^{th}$ adjustment includes: determining, based on power of the echo signal at an angle obtained through an $(i-1)^{th}$ adjustment, a covariance matrix of the echo signal at the angle obtained through the $(i-1)^{th}$ adjustment; and adjusting, based on the covariance matrix, the angle obtained through the $(i-1)^{th}$ adjustment, to obtain an angle obtained through the $i^{th}$ adjustment, where $N>1$, and $0<i<N$.

In some embodiments, the angle in the first location information includes an angle of arrival in a horizontal dimension and an angle of arrival in a pitch dimension that are of the echo signal in the spatial location grid described by the first location information.

In comparison with a conventional solution in which Fourier transformation is performed on a radar echo signal to obtain range, doppler, and angle information of each location grid in space, this application proposes to perform DOA estimation on the second spectrum according to an adaptive iterative algorithm, to determine angle information of the location grids, and the determined angle information includes angles of arrival in the horizontal dimension and the pitch dimension. This improves accuracy and comprehensiveness of the angle information, and helps determine an actual location of each location grid in space.

In some embodiments, determining, based on the first energy information corresponding to each piece of first location information in the first spectrum, the occupation probability of the spatial location grid indicated by each piece of first location information, to obtain the measured occupied grid map OGM of the current frame includes: performing, by using an inverse sensor model, denoising on the occupation probability of the spatial location grid indicated by each piece of first location information, to obtain the measured OGM of the current frame.

Based on the foregoing solution, when the measured OGM of the current frame is generated, the inverse sensor model may be used to denoise the occupation probability of each spatial location grid, to improve accuracy of the measured OGM.

According to a second aspect, this application provides an occupied grid map generation apparatus. The apparatus may be a vehicle or a module in a vehicle, or may be used in the vehicle or the module in the vehicle. The apparatus includes a communication unit and a processing unit. The communication unit is configured to receive a radar echo signal of the vehicle in a current frame. The processing unit is configured to: obtain a first spectrum based on the radar echo signal; and determine, based on first energy information corresponding to each piece of first location information in the first spectrum, an occupation probability of a spatial location grid indicated by each piece of first location information, to obtain a measured occupied grid map OGM of the current frame. The processing unit is further configured to: determine a predicted OGM of the current frame based on pose data and movement information of the vehicle and an OGM of a previous frame of the current frame; and correct the predicted OGM of the current frame based on the measured OGM of the current frame to obtain an OGM of the current frame. The first spectrum is used to describe a correspondence between first location information and first energy information that are of a spatial location grid of the echo, the first location information includes a velocity, a range, and an angle, and any one of the spatial location grids corresponds to at least one grid in the measured OGM.

In some embodiments, the processing unit is specifically configured to: perform Fourier transformation on the radar echo signal to obtain a second spectrum, where the second spectrum is used to describe a correspondence between second location information and the first energy information that are of the spatial location grids of the echo, and the second location information includes the velocity and the range; and perform direction of arrival DOA estimation on the second spectrum to obtain the first spectrum.

In some embodiments, the processing unit is specifically configured to: adjust an initial angle N times to obtain the angle included in the first spectrum, where an $i^{th}$ adjustment includes: determining, based on power of the echo signal at an angle obtained through an $(i-1)^{th}$ adjustment, a covariance matrix of the echo signal at the angle obtained through the $(i-1)^{th}$ adjustment; and adjusting, based on the covariance matrix, the angle obtained through the $(i-1)^{th}$ adjustment, to obtain an angle obtained through the $i^{th}$ adjustment, where N>1, and 0<i<N.

In some embodiments, the angle in the first location information includes an angle of arrival in a horizontal dimension and an angle of arrival in a pitch dimension that are of the echo signal in the spatial location grid described by the first location information.

In some embodiments, the processing unit is specifically configured to perform, by using an inverse sensor model, denoising on the occupation probability of the spatial location grid indicated by each piece of first location information, to obtain the measured OGM of the current frame.

According to a third aspect, this application provides another occupied grid map generation apparatus, including a processor and a memory. The memory is configured to store a program, and the processor is configured to execute the program stored in the memory, so that the apparatus implements the method according to any possible design of the first aspect.

According to a fourth aspect, an embodiment of this application provides a computer-readable storage medium. The computer-readable storage medium stores program code. When the program code is run on a computer, the computer is enabled to perform the method according to any possible design of the first aspect.

According to a fifth aspect, an embodiment of this application provides a computer program product. When the computer program product runs on a computer, the computer is enabled to perform the method according to any possible design of the first aspect.

According to a sixth aspect, an embodiment of this application provides a chip system. The chip system includes a processor. The processor is coupled to a memory, and is configured to invoke a computer program or computer instructions stored in the memory, so that the processor performs the method according to any possible design of the first aspect.

According to a seventh aspect, an embodiment of this application provides a processor. The processor is configured to invoke a computer program or computer instructions stored in a memory, so that the processor performs the method according to any possible design of the first aspect.

In embodiments of this application, based on the implementations according to the foregoing aspects, further combination may be performed to provide more implementations. For technical effect that can be achieved by any possible design of any one of the second aspect to the seventh aspect, refer to descriptions of technical effect that can be achieved by any possible design of the first aspect. Repeated parts are not described.

BRIEF DESCRIPTION OF DRAWINGS

FIG. 1 is a diagram of a vehicle according to an embodiment of this application;
FIG. 2 is a flowchart of an OGM generation method;
FIG. 3 is a diagram of a probability distribution curve of a point target obtained through fitting by using a Gaussian distribution model according to an embodiment of this application;
FIG. 4 is a diagram of a probability distribution curve of an extended target obtained through fitting by using a Gaussian distribution model according to an embodiment of this application;
FIG. 5 is a flowchart of an OGM generation method according to an embodiment of this application;
FIG. 6 is a diagram of a structure of an OGM generation apparatus according to an embodiment of this application; and
FIG. 7 is a diagram of a structure of another OGM generation apparatus according to an embodiment of this application.

DESCRIPTION OF EMBODIMENTS

To facilitate understanding of the solutions provided in embodiments of this application, technical terms in this application are first described.

(1) Environment sensing: Environment sensing is a basis and prerequisite for autonomous traveling of an intelligent vehicle. Collection, processing, and analysis of environment information and in-vehicle information can help an autonomous vehicle perform path planning and obstacle avoidance. Applying multi-radar fusion to environment sensing is expected to make an algorithm adapt to more complex scenarios and describe more complex road environments. In a multi-radar fusion application scenario, an OGM is a common means. The OGM may be used to implement road edge detection and static obstacle positioning, to obtain a passable area of a vehicle and ensure safety of autonomous driving.

(2) Millimeter-wave radar: The millimeter-wave radar is a radar that operates in a millimeter-wave band for detection. An operating frequency band is 30 GHz to 300 GHz, and a wavelength is 1 mm to 10 mm, and is between a microwave and a centimeter wave. Compared with a centimeter-wave radar, the millimeter-wave radar features a small size, easy integration, and high spatial resolution. Therefore, the millimeter-wave radar is usually used on a vehicle to assist the vehicle in implementing autonomous driving. In terms of a hardware structure, a vehicle-mounted millimeter-wave radar mainly includes an antenna, a transceiver module, and a signal processing module. A working principle of the millimeter-wave radar is as follows: A highfrequency circuit is used to generate an electromagnetic wave with a specific modulation frequency, an antenna is used to send the electromagnetic wave and receive an electromagnetic wave reflected from a target, and all parameters of the target are calculated based on parameters of sent and received electromagnetic waves. Alternatively, ranging, velocity measurement, and azimuth measurement may be simultaneously performed on a plurality of targets. Ranging is to continuously send millimeter wave signals to a target, then receive, by using a sensor, a millimeter wave returned from an object, and obtain a range to the target by detecting round trip time of the millimeter wave. Velocity measurement is to obtain a moving velocity of a target relative to the radar by calculating a frequency change of a radar wave returned to a receive antenna based on doppler effect. Simply speaking, the relative velocity is directly proportional to the frequency change. Azimuth measurement is to calculate an azimuth of a target based on a phase difference between radar waves reflected by a same target and received by an antenna array.

(3) Range doppler (range doppler, RD) spectrum: The range doppler spectrum is a spectrum used to represent range and velocity information of each point in space. A process of obtaining the RD spectrum is as follows: First, windowing and Fourier transformation are performed on range dimension data of a radar echo signal to obtain a range spectrum. Then, windowing and Fourier transformation are performed on a velocity dimension of the range spectrum, and doppler compensation is performed, to obtain the RD spectrum.

(4) Constant false alarm rate (constant false alarm rate, CFAR) detection algorithm: The constant false alarm rate detection algorithm is an algorithm used to detect an energy point in an RD spectrum. A specific implementation process is as follows: First, an area without a target is found in the RD spectrum, and an average power of the area is used as a noise power. For example, when doppler information of an area indicates that a velocity of the area is low (or zero), it may be determined that the area is an area without a target. Second, a threshold is set based on the noise power of the area without a target, noise of all points is calculated based on the noise power of the area without a target, and points whose noise is greater than the threshold are reserved. Third, the plurality of reserved points are filtered. For example, if a range corresponding to a point is very short, but noise of an echo of the point is far less than noise at the range, it is considered that the point may be a false point, and the point is deleted. Finally, remaining points after filtering are used as energy points.

(5) Inverse sensor model (inverse sensor model, ISM): A vehicle-mounted radar can detect an object at a long range in various weather conditions. However, due to impact of sensor noise, a radar echo signal is affected by noise and cannot be used to determine whether a space area is idle or occupied. To resolve such a problem, in a related technology, it is proposed to convert original radar scanning data into an OGM by using an inverse sensor model and a deep neural network. In the deep neural network, some occupation labels generated by the radar are used for self-supervision, and actual space occupation is learned from past experience, without manual supervision.

(6) Sampling point quantity: The sampling point quantity is a quantity of sampling points of a time domain signal.

(7) Fast Fourier transformation (fast Fourier transformation, FFT): Because it is difficult to learn a feature of a time domain signal from the signal, the signal needs to be transformed to a frequency domain by using FFT, and the feature of the signal is analyzed based on a signal spectrum. It is assumed that a sampling frequency is Fs, a signal frequency is F, and a quantity of sampling points is N. An array including N complex numbers may be obtained through FFT. Each point corresponds to a frequency bin, and a modulus value of each point is an amplitude characteristic at a corresponding frequency value.

(8) In embodiments of this application, "at least one item" indicates one or more items, and "a plurality of items" indicates two or more items. "At least one" indicates one or more, and "a plurality of' indicates two or more. The term "and/or" describes an association relationship between associated objects and represents that three relationships may exist. For example, A and/or B may represent the following three cases: Only A exists, both A and B exist, and only B exists. A and B may be in a singular or plural form. In text descriptions of embodiments of this application, a character "/" usually indicates an "or" relationship between associated objects.

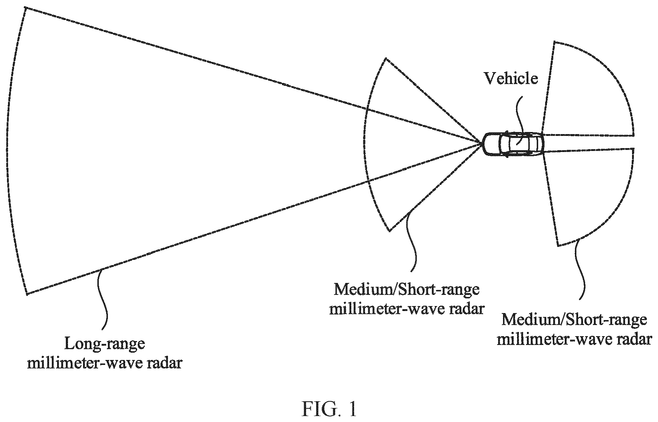

The solutions in this application may be applied to an autonomous driving scenario of a vehicle. With development and progress of science and technology, vehicle intelligence has gradually become a research hotspot in the vehicle field. An intelligent vehicle (referred to as a vehicle for short below) can bring safer and more comfortable driving experience to people. For example, a plurality of sensors may be installed on the vehicle, to obtain ambient environment information of the vehicle by using the sensors, and analyze and process the obtained information, to implement functions such as obstacle sensing, target recognition, vehicle positioning, path planning, and driver monitoring/reminder. In this way, vehicle driving safety, automation, and comfort are improved. As shown in FIG. 1, a sensor that may be installed on the vehicle may include a millimeter-wave radar. The millimeter-wave radar uses a millimeter wave as a detection medium, and can measure a range, an angle, a velocity, and the like between the millimeter-wave radar and a measured object. Millimeter-wave radars may be classified into a long-range radar, a medium-range radar, and a short-range radar based on detection ranges of the millimeter-wave radars. The long-range radar is mainly oriented to application scenarios such as active cruise and braking assistance. The long-range radar does not have a high requirement on a detection angular width, but has a low requirement on an antenna beam width in terms of an antenna. The medium-range radar and the short-range radar are mainly oriented to application scenarios such as auto parking, lane merge assistance, and blind spot detection. The medium-range radar and the short-range radar have a high requirement on a detection angular width, have a high requirement on an antenna beam width in terms of an antenna, and require the antenna to be at a low side lobe level. A beam width is used to ensure a detectable angular range, and a low side lobe is used to reduce clutter energy reflected by the ground, reduce a false alarm probability, and ensure driving safety. The long-range radar may be installed in the front of a vehicle body, and the medium-range radar and the short-range radar may be installed at four corners of the vehicle. Joint use can implement 360-degree coverage around the vehicle body.

The millimeter-wave radar may include a housing. At least one printed circuit board (printed circuit board, PCB) is disposed in the housing. For example, a power supply PCB and a radar PCB may be included. The power supply PCB may provide an internal voltage of the radar, and may also provide an interface and a security function for communicating with another device. The radar PCB may provide receiving, transmitting, and processing of a millimeter wave signal, and a component for processing a millimeter wave signal and an antenna (a transmit antenna Tx and a receive antenna Rx) for receiving and transmitting a millimeter wave signal are integrated on the radar PCB. The antenna may be formed on a back surface of the radar PCB in a microstrip array manner, and is configured to transmit and receive a millimeter wave.

It should be noted that FIG. 1 is merely an example description of the vehicle, and the vehicle in this application is not limited to the vehicle shown in FIG. 1. For example, the vehicle may further include other components such as a vehicle-mounted chip, a vehicle-mounted controller, a vehicle-mounted terminal, a camera apparatus, a lidar, a millimeter-wave radar, and an ultrasonic sensor. The camera apparatus in the vehicle is configured to obtain image information of an environment in which the vehicle is located. Currently, a plurality of cameras may be installed on the vehicle to obtain information from more perspectives. The lidar is short for a laser detection and ranging system, mainly includes a transmitter, a receiver, and a signal processing unit, and is configured to measure information such as a location, a velocity, a range, and/or a size of a target object. The ultrasonic sensor may also be referred to as an ultrasonic radar, and is a sensing apparatus that performs detection by using an ultrasonic wave. A working principle of the ultrasonic sensor is as follows: An ultrasonic transmitting apparatus is used to transmit an ultrasonic wave, a receiving apparatus is used to receive an ultrasonic wave reflected by an obstacle, and a range is calculated based on a difference between time at which the ultrasonic wave is received and time at which the ultrasonic wave is reflected. A type of the vehicle-mounted radar used to implement the solutions is not limited in this application. For example, the solutions of this application may be implemented based on data collected by a lidar, a millimeter-wave radar, and an ultrasonic radar. For ease of description, the following uniformly uses an example in which the vehicle-mounted radar used in this application is a millimeter-wave radar for description.

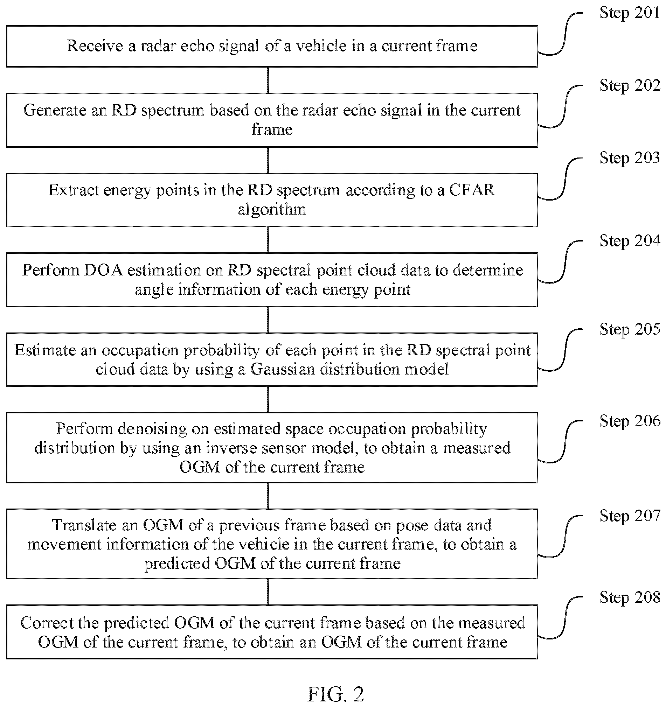

To improve safety of autonomous driving of a vehicle, the vehicle draws an OGM based on pose data in a traveling process and data collected by a sensor, and implements obstacle avoidance and route planning based on the OGM. FIG. 2 is a flowchart of an OGM generation method. A procedure of the method may be performed by a processor in a radar of a vehicle, or may be performed by another processing module in the vehicle. The method specifically includes: Step 201: Receive a radar echo signal of the vehicle in a current frame. A millimeter-wave radar is used as an example. After transmitting a millimeter wave, the radar may receive a radar echo signal returned by each area or each location grid in space. Step 202: Generate an RD spectrum based on the radar echo signal in the current frame. For a specific process of generating the RD spectrum, refer to the descriptions of the foregoing technical terms. Details are not described herein again. Step 203: Extract energy points in the RD spectrum according to a CFAR algorithm. The energy point is a location grid in which a target object exists. For a specific implementation process of extracting the energy points, refer to related descriptions in the foregoing technical terms. After the energy points are extracted, RD spectral point cloud data is obtained, and each point in the point cloud data is an energy point. Step 204: Perform DOA estimation on the RD spectral point cloud data to determine angle information of each energy point. Step 205: Estimate an occupation probability of each point in the RD spectral point cloud data by using a Gaussian distribution model. For example, a location of each point in real three-dimensional space may be determined based on range, velocity, and angle information of each point in the RD spectral point cloud data, and the occupation probability of each point is predicted by using the Gaussian distribution model with reference to energy information of the radar echo corresponding to each point. In this way, an occupation probability of each location grid in the space is obtained. Step 206: Perform denoising on estimated space occupation probability distribution by using an inverse sensor model, to obtain a measured OGM of the current frame. For example, a value of each grid corresponding to the measured OGM is used to represent whether there is a target object in a location grid in space corresponding to each grid, and the value of each grid may be stored as a measurement matrix. Step 207: Translate an OGM of a previous frame based on pose data and the movement information of the vehicle in the current frame, to obtain a predicted OGM of the current frame. An execution sequence of step 207 and step 201 to step 206 is not limited. For example, step 207 may be performed before step 201 to step 206, or step 27 and step 201 to step 206 may be performed synchronously. For example, the pose data and the movement information of the vehicle may include displacement, yaw, and the like of the vehicle. Step 208: Correct the predicted OGM of the current frame based on the measured OGM of the current frame, to obtain an OGM of the current frame. Whether there is a target object in each location grid in the real space may be determined based on the OGM of the current frame, so that obstacle avoidance can be implemented in time.

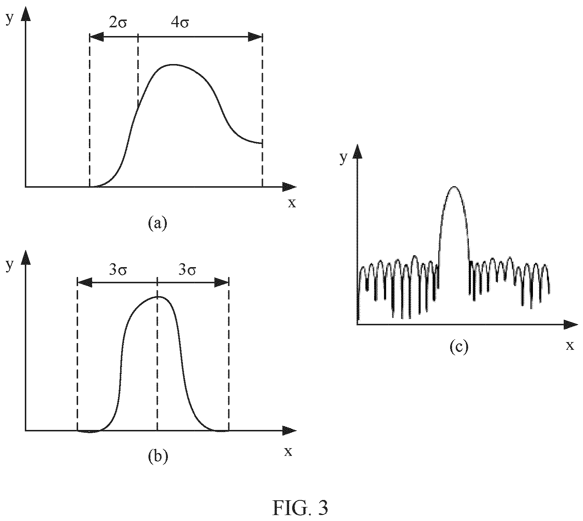

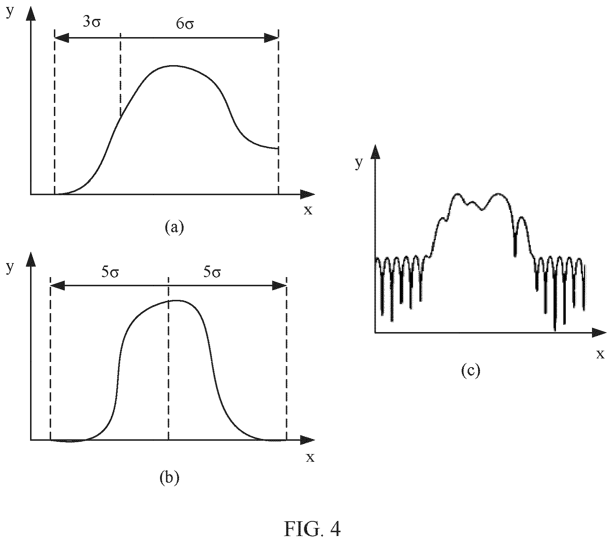

However, in step 205 in FIG. 2, when the occupation probability of each grid is predicted by using the Gaussian distribution mathematical model, for a small point target, a degree of fitting between a Gaussian distribution curve and probability distribution of the point target is good. For example, refer to FIG. 3. (a) to (b) in FIG. 3 are probability distribution curves of the point target obtained through fitting by using Gaussian distribution, and (c) in FIG. 3 is occupation of a point target obtained through actual simulation. It can be learned that, for probability fitting of the point target, accuracy of prediction performed by using the Gaussian distribution is high. However, for a large extended target, refer to FIG. 4. (a) to (b) in FIG. 4 are probability distribution curves of the extended target obtained through fitting by using Gaussian distribution, and (c) in FIG. 4 is occupation of the extended target obtained through actual simulation. It can be learned that probability distribution that is of the extended target and that is obtained through fitting by using the Gaussian distribution is inconsistent with actual probability distribution. Consequently, accuracy of a generated OGM is reduced, and safety of autonomous driving is reduced.

For the foregoing problem, this application provides an occupied grid map generation method. In a process of generating an OGM, an energy point in an RD spectrum is no longer extracted, but location information and energy information of each spatial location grid are directly determined based on an echo signal received by a radar. In this way, actual energy distribution of entire space is obtained, and an occupation probability of each spatial location grid is determined based on the actual energy distribution, to obtain a measured OGM of a current frame. Then, the OGM of the current frame is jointly determined with reference to a predicted OGM of the current frame that is obtained by predicting an OGM of a previous frame. This improves accuracy of the generated OGM, and improves safety of autonomous driving.

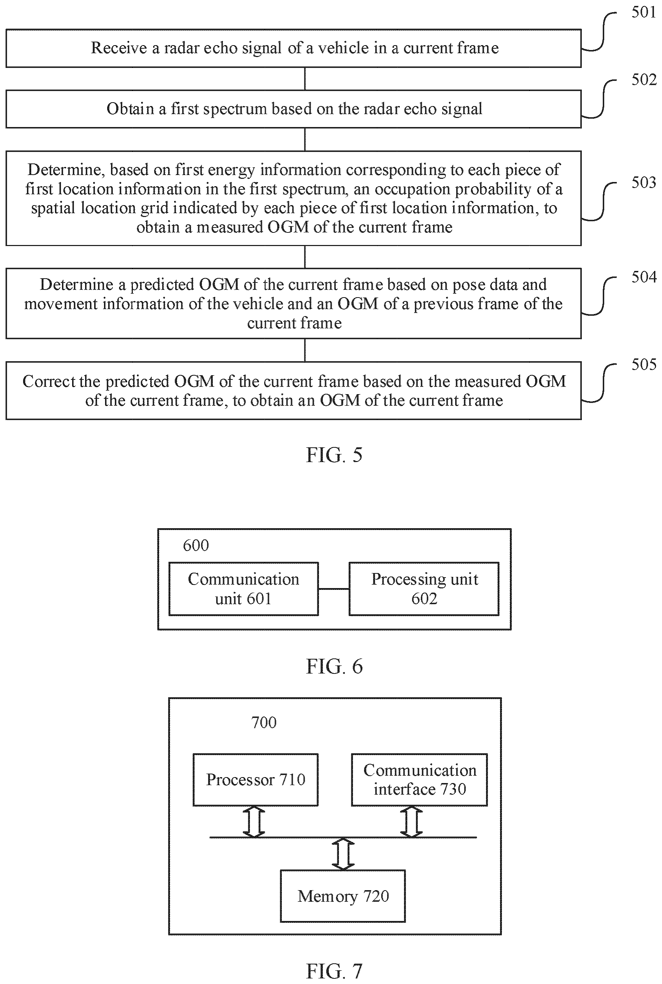

The following specifically describes the solutions of this application with reference to the vehicle shown in FIG. 1. FIG. 5 is a flowchart of an occupied grid map generation method according to an embodiment of this application. For example, a method procedure shown in FIG. 5 may be performed by a processor of a vehicle-mounted radar, or may be performed by another processing module or processing chip in the vehicle, for example, may be performed by a mobile data center (mobile data center, MDC) of the vehicle. For example, when the method procedure shown in FIG. 5 is performed by the MDC, a communication interface between the vehicle-mounted radar and the MDC may be disposed, so that the vehicle-mounted radar transmits collected data to the MDC, and the MDC generates an OGM based on the data from the vehicle-mounted radar. The method procedure shown in FIG. 5 specifically includes the following steps.

501: Receive a radar echo signal of the vehicle in a current frame.

For example, the vehicle-mounted radar may transmit a radar signal at a specified interval or in real time, and receive a radar echo signal reflected back by each location grid in external space.

502: Obtain a first spectrum based on the radar echo signal.

The first spectrum is used to describe a correspondence between first location information and first energy information that are of spatial location grids of an echo, and the first location information includes a velocity, a range, and an angle.

Any location grid in space is used as an example. A range, a velocity, and an angle of the location grid may be determined based on an echo signal reflected back by the location grid (for a specific determining process, refer to the descriptions of the millimeter-wave radar in point (2) in the foregoing technical terminology introduction part). Therefore, first location information of the location grid in the space may be determined based on the range, the velocity, and the angle of the location grid. Further, a correspondence between first energy information and the first location information that are of the location grid may be determined based on energy of the echo signal reflected back by the location grid.

After correspondences between energy information and location information that are of all energy points in the space are determined, the first spectrum of the space may be determined.

503: Determine, based on first energy information corresponding to each piece of first location information in the first spectrum, an occupation probability of a spatial location grid indicated by each piece of first location information, to obtain a measured OGM of the current frame.

Any location grid in the space is still used as an example. A location of the location grid in the space may be determined based on the first location information of the location grid, and an occupation probability of the location grid, that is, a probability that an object exists in the location grid, is determined based on the first energy information of the location grid. Further, a grid in which the location grid is located in a to-be-generated OGM is determined with reference to the location of the location grid in the space. Optionally, the location grid may correspond to a grid in the to-be-generated OGM, or may correspond to a specified quantity of grids in the to-be-generated OGM (a specific specified quantity may be determined based on generation precision of the OGM), and values corresponding to one or more grids may be determined based on the occupation probability of the location grid.

For example, after the occupation probability corresponding to each piece of first location information is determined, and before the OGM is generated, denoising may be further performed, by using an inverse sensor model, on the occupation probability corresponding to each piece of first location information, to obtain a denoised occupation probability corresponding to each piece of first location information, so that when a value of a corresponding grid in the OGM is determined based on the occupation probability, accuracy of the value can be improved.

504: Determine a predicted OGM of the current frame based on pose data and movement information of the vehicle and an OGM of a previous frame of the current frame.

The previous frame of the current frame is an echo signal received by the radar after the radar transmits a radar signal last time.

For example, the pose data of the vehicle may include data such as a steering angle of the vehicle within time from the previous frame to the current frame, and the movement information of the vehicle may include information such as a displacement of the vehicle within the time from the previous frame to the current frame. In other words, the pose data and the movement information of the vehicle indicate a location change of the vehicle in the space within the time from the previous frame to the current frame. The OGM of the previous frame is translated based on the location change of the vehicle to obtain the predicted OGM of the current frame.

It should be noted that an execution sequence of step 504 and step 501 to step 503 is not limited in this application. For example, step 504 may be performed, and then step 501 to step 503 are performed. Alternatively, step 504 and step 501 to step 503 may be performed synchronously.

505: Correct the predicted OGM of the current frame based on the measured OGM of the current frame to obtain an OGM of the current frame.

For example, when the OGM of the current frame is generated based on the measured OGM and the predicted OGM, construction may be performed based on a static binary Bayesian filtering principle. For example, refer to the following Formula (1):

$$l_{t,i} = l_{t-1,i} + \mathrm{ism}(m_i) + l_0 \quad \text{Formula (1)}$$

In the foregoing Formula (1), if a moment t corresponds to the current frame, and a moment t-1 corresponds to the previous frame of the current frame, $l_{t-1,i}$ is a value of an $i^{th}$ grid in the OGM of the previous frame, ism($m_i$) is a value of an $i^{th}$ grid in the measured OGM of the current frame, $l_{t,i}$ is a value of an $i^{th}$ grid in the OGM of the current frame, $l_0$ is a log logarithmic value of a prior occupation probability, and $l_0$ is a constant, for example, may be 0.

Based on the foregoing solutions, in the OGM generation method provided in this application, an energy point in an RD spectrum is no longer extracted. This avoids a problem that an occupation probability of an energy point obtained through fitting by using a mathematical model like a Gaussian distribution model is inaccurate. This application proposes to determine location information and energy information that are of each spatial location grid by using an echo signal, so that real energy distribution in space can be reflected. Further, a grid in an OGM corresponding to each location grid is determined based on the location information of each location grid, and a value of the grid is determined based on the energy information of each location grid. Therefore, in comparison with a conventional method, this can improve accuracy of the generated OGM and improve safety of autonomous driving.

In some embodiments, when step 502 of obtaining the first spectrum based on the radar echo signal is performed, Fourier transformation may be first performed twice on the radar echo signal to obtain a second spectrum (alternatively, which may be referred to as an RD spectrum. For a specific process of generating the RD spectrum, refer to the foregoing descriptions of technical terms. For consistency of terms, the second spectrum is still used as an example for description below). The second spectrum is used to describe a correspondence between second location information and the first energy information that are of the spatial location grids of the echo, where the second location information includes the velocity and the range. Further, direction of arrival (direction of arrival, DOA) estimation may be performed on the second spectrum to obtain angle information of each spatial location grid, and first location information of each spatial location grid is determined with reference to angle information, range information, and velocity information. Therefore, a correspondence between the first location information and first energy information that are of each spatial location grid, that is, the first spectrum, may be obtained.

For example, when DOA estimation is performed on the second spectrum to determine the angle information of each spatial location grid, an FFT algorithm may be used, or a super-resolution algorithm, for example, an iterative adaptive approach (iterative adaptive approach, IAA) algorithm, may be used. The following uses the IAA algorithm as an example to describe a step of performing DOA estimation on the second spectrum.

Step 1: Set a K×K-dimensional diagonal matrix P, where each element on a diagonal of the matrix P corresponds to power of a signal reflected at each angle on a spatial location grid.

For example, for setting an initial value of an element on the diagonal of the matrix P, refer to the following Formula (2):

$$\widehat{P_k} = \frac{1}{(a^H(\theta_k)\mathrm{a}(\theta_k))^2 * N} \sum_{n=1}^{N} |a^H(\theta_k) * \mathrm{y(n)}|^2 \qquad \text{Formula (2)}$$

Here, $\widehat{P_k}$ is power of a signal reflected at an angle $\theta_k$ on a $k^{th}$ spatial location grid, a($\theta_k$) is a steering vector of an antenna array at the angle $\theta_k$ (related to an array element spacing of the antenna array), N is a sampling point quantity, and y(n) is a received signal.

Step 2: Calculate a covariance matrix based on the matrix P set in step 1.

For example, the covariance matrix may be calculated according to the following Formula (3):

$$R = A(\theta)PA^H(\theta) \qquad \text{Formula (3)}$$

Here, R is a covariance matrix, A is an array manifold of the antenna array, and A=[$a_1$, $a_2$, ..., $a_k$].

Step 3: Update the angle $\theta_k$ based on the covariance matrix.

For example, calculation of the following Formula (4) and Formula (5) may be sequentially performed for each spatial location grid k:

$$\widehat{s_k}(\text{n}) = \frac{a^H(\theta_k)R^{-1}\text{y(n)}}{a^H(\theta_k)R^{-1}\text{a}(\theta_k)}, \text{ n}=1, 2, ..., \text{N} \qquad \text{Formula (4)}$$

$$\widehat{P_k} = \frac{1}{N}\sum_{n=1}^{N}|\widehat{s_k}(\text{n})|^2 \qquad \text{Formula (5)}$$

Here, $\widehat{s_k}(\text{n})$ is an nth sampling point of a signal received on the kth spatial location grid. For descriptions of other parameters in Formula (4) and Formula (5), refer to the descriptions in the foregoing Formula (1) to Formula (3).

Step 4: Repeat step 2 and step 3 a preset quantity of times, and output an angle $\theta_k$ obtained through last update as an angle obtained through estimation.

The following describes an OGM generation apparatus for implementing the foregoing methods in embodiments of this application with reference to the accompanying drawings. Therefore, all the foregoing content may be used in the following embodiments. Repeated content is not described again.

FIG. 6 is a block diagram of an OGM generation apparatus 600 according to an embodiment of this application. The OGM generation apparatus 600 may correspondingly implement functions or steps implemented by the vehicle or the module in the vehicle in the foregoing method embodiments. The OGM generation apparatus 600 may include a communication unit 601 and a processing unit 602. Optionally, a storage unit may be further included. The storage unit may be configured to store instructions (code or a program) and/or data. The processing unit 602 and the communication unit 601 may be coupled to the storage unit. For example, the processing unit 602 may read the instructions (the code or the program) and/or the data in the storage unit, to implement a corresponding method. The foregoing units may be independently disposed, or may be partially or completely integrated.

In some possible implementations, the OGM generation apparatus 600 can implement behavior and functions of the vehicle or the module in the vehicle in the foregoing method embodiments. For example, the OGM generation apparatus 600 may be a vehicle, or may be a processing module, a processor, or a chip system in the vehicle. The communication unit 601 may be configured to perform all receiving and transmitting operations performed by the vehicle or a module (for example, a vehicle-mounted radar) in the vehicle in the foregoing embodiments. For example, the communication unit 601 may be configured to perform the operation of receiving the radar echo signal in embodiments shown in FIG. 5. The processing unit 602 may be configured to perform all operations, except the receiving and transmitting operations, performed by the vehicle or the module in the vehicle in embodiments shown in FIG. 5, and/or configured to support another process of the technology described in this specification.

For example, the processing unit 602 may be configured to: obtain a first spectrum based on the radar echo signal; and determine, based on first energy information corresponding to each piece of first location information in the first spectrum, an occupation probability of a spatial location grid indicated by each piece of first location information, to obtain a measured occupied grid map OGM of a current frame. The processing unit 602 is further configured to: determine a predicted OGM of the current frame based on pose data and movement information of the vehicle and an OGM of a previous frame of the current frame; and correct the predicted OGM of the current frame based on the measured OGM of the current frame to obtain an OGM of the current frame. The first spectrum is used to describe a correspondence between first location information and first energy information that are of a spatial location grid of the echo, the first location information includes a velocity, a range, and an angle, and any one of the spatial location grids corresponds to at least one grid in the measured OGM.

For other operations performed by the processing unit 602 and the communication unit 601, refer to the related descriptions in the foregoing method embodiments.

It should be noted that, in embodiments of this application, division into units is an example, and is merely logical function division. In actual implementation, another division manner may be used. Function units in embodiments of this application may be integrated into one processing unit 602, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium, and includes several instructions for instructing a computer device (which may be a personal computer, a server, or a network device) or a processor (processor) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

It should be understood that the processing unit 602 in embodiments of this application may be implemented by a processor or a processor-related circuit component, and the communication unit 601 may be implemented by a transceiver, a transceiver-related circuit component, or a communication interface. For example, the OGM generation apparatus in the foregoing embodiments may also be in a form shown in FIG. 7. An apparatus 700 shown in FIG. 7 includes at least one processor 710 and a memory 720, and optionally, may further include a communication interface 730.

In this embodiment of this application, a specific connection medium between the processor 710 and the memory 720 is not limited.

The apparatus in FIG. 7 further includes a communication interface 730. When communicating with another device, the processor 710 may transmit a signal through the communication interface 730. For example, the communication interface 730 may be configured to: based on an indication of the processor 710, transmit a radar signal to the outside and receive a radar echo signal reflected from the outside.

When the OGM generation apparatus is in the form shown in FIG. 7, the processor 710 in FIG. 7 may invoke computer-executable instructions stored in the memory 720, so that the apparatus 700 can perform the method performed by the OGM generation apparatus in any one of the foregoing method embodiments.

An embodiment of this application further provides a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system further includes a memory, and the memory stores a computer program or computer instructions.

An embodiment of this application further relates to a processor. The processor is configured to invoke a computer program or computer instructions stored in a memory, so that the processor performs the method according to any one of the foregoing embodiments.

It should be understood that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

**Claims**

1. An occupied grid map generation method, wherein the method is applied to a vehicle or a module in a vehicle, and the method comprises:

   receiving a radar echo signal of the vehicle in a current frame;
   obtaining a first spectrum based on the radar echo signal, wherein the first spectrum is used to describe a correspondence between first location information and first energy information that are of spatial location grids of an echo, and the first location information comprises a velocity, a range, and an angle;
   determining, based on first energy information corresponding to each piece of first location information in the first spectrum, an occupation probability of a spatial location grid indicated by each piece of first location information, to obtain a measured occupied grid map OGM of the current frame, wherein any one of the spatial location grids corresponds to at least one grid in the measured OGM;
   determining a predicted OGM of the current frame based on pose data and movement information of the vehicle and an OGM of a previous frame of the current frame; and

correcting the predicted OGM of the current frame based on the measured OGM of the current frame to obtain an OGM of the current frame.

2. The method according to claim 1, wherein obtaining the first spectrum based on the radar echo signal comprises:

performing Fourier transformation on the radar echo signal to obtain a second spectrum, wherein the second spectrum is used to describe a correspondence between second location information and the first energy information that are of the spatial location grids of the echo, and the second location information comprises the velocity and the range; and

performing direction of arrival DOA estimation on the second spectrum to obtain the angle comprised in the first spectrum.

3. The method according to claim 2, wherein performing DOA estimation on the second spectrum to obtain the angle comprised in the first spectrum comprises:
adjusting an initial angle N times to obtain the angle comprised in the first spectrum, wherein an $i^{th}$ adjustment comprises:

determining, based on power of the echo signal at an angle obtained through an $(i-1)^{th}$ adjustment, a covariance matrix of the echo signal at the angle obtained through the $(i-1)^{th}$ adjustment; and

adjusting, based on the covariance matrix, the angle obtained through the $(i-1)^{th}$ adjustment, to obtain an angle obtained through the $i^{th}$ adjustment, wherein N>1, and 0<i<N.

4. The method according to any one of claims 1 to 3, wherein the angle in the first location information comprises an angle of arrival in a horizontal dimension and an angle of arrival in a pitch dimension that are of the echo signal in the spatial location grid described by the first location information.

5. The method according to any one of claims 1 to 4, wherein determining, based on the first energy information corresponding to each piece of first location information in the first spectrum, an occupation probability of the spatial location grid indicated by each piece of first location information, to obtain the measured occupied grid map OGM of the current frame comprises:
performing, by using an inverse sensor model, denoising on the occupation probability of the spatial location grid indicated by each piece of first location information, to obtain the measured OGM of the current frame.

6. An occupied grid map generation apparatus, wherein the apparatus is a vehicle or a module in a vehicle, or the apparatus is used in the vehicle or the module in the vehicle, and the apparatus comprises:

a communication unit, configured to receive a radar echo signal of the vehicle in a current frame; and
a processing unit, configured to obtain a first spectrum based on the radar echo signal, wherein the first spectrum is used to describe a correspondence between first location information and first energy information that are of spatial location grids of an echo, and the first location information comprises a velocity, a range, and an angle, wherein
the processing unit is further configured to determine, based on first energy information corresponding to each piece of first location information in the first spectrum, an occupation probability of a spatial location grid indicated by each piece of first location information, to obtain a measured occupied grid map OGM of the current frame, wherein any one of the spatial location grids corresponds to at least one grid in the measured OGM;
the processing unit is further configured to determine a predicted OGM of the current frame based on pose data and movement information of the vehicle and an OGM of a previous frame of the current frame; and
the processing unit is further configured to correct the predicted OGM of the current frame based on the measured OGM of the current frame to obtain an OGM of the current frame.

7. The apparatus according to claim 6, wherein the processing unit is specifically configured to:

perform Fourier transformation on the radar echo signal to obtain a second spectrum, wherein the second spectrum is used to describe a correspondence between second location information and the first energy information that are of the spatial location grids of the echo, and the second location information comprises the velocity and the range; and
perform direction of arrival DOA estimation on the second spectrum to obtain the first spectrum.

8. The apparatus according to claim 7, wherein the processing unit is specifically configured to:
   adjust an initial angle N times to obtain the angle comprised in the first spectrum, wherein an $i^{th}$ adjustment comprises:

   > determining, based on power of the echo signal at an angle obtained through an $(i-1)^{th}$ adjustment, a covariance matrix of the echo signal at the angle obtained through the $(i-1)^{th}$ adjustment; and
   > adjusting, based on the covariance matrix, the angle obtained through the $(i-1)^{th}$ adjustment, to obtain an angle obtained through the $i^{th}$ adjustment, wherein N>1, and 0<i<N.

9. The apparatus according to any one of claims 6 to 8, wherein the angle in the first location information comprises an angle of arrival in a horizontal dimension and an angle of arrival in a pitch dimension that are of the echo signal in the spatial location grid described by the first location information.

10. The apparatus according to any one of claims 6 to 9, wherein the processing unit is specifically configured to:
    perform, by using an inverse sensor model, denoising on the occupation probability of the spatial location grid indicated by each piece of first location information, to obtain the measured OGM of the current frame.

11. An occupied grid map generation apparatus, comprising a processor and a memory, wherein

    > the memory is configured to store a program; and
    > the processor is configured to execute the program stored in the memory, so that the apparatus implements the method according to any one of claims 1 to 5.

12. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 5.

13. A chip system, comprising a communication interface and a processor, wherein

    > the communication interface is configured to input and/or output signaling or data; and
    > the processor is configured to execute a computer-executable program, to enable a device on which the chip system is installed to perform the method according to any one of claims 1 to 5.

14. A computer program product, wherein when the computer program product runs on a computer, the computer is enabled to perform the method according to any one of claims 1 to 5.

Vehicle

Medium/Short-range
millimeter-wave radar

Medium/Short-range
millimeter-wave radar

Long-range
millimeter-wave radar

FIG. 1

Step 201

Receive a radar echo signal of a vehicle in a current frame

Step 202

Generate an RD spectrum based on the radar echo signal in the current frame

Step 203

Extract energy points in the RD spectrum according to a CFAR algorithm

Step 204

Perform DOA estimation on RD spectral point cloud data to determine angle information of each energy point

Step 205

Estimate an occupation probability of each point in the RD spectral point cloud data by using a Gaussian distribution model

Step 206

Perform denoising on estimated space occupation probability distribution by using an inverse sensor model, to obtain a measured OGM of the current frame

Step 207

Translate an OGM of a previous frame based on pose data and movement information of the vehicle in the current frame, to obtain a predicted OGM of the current frame

Step 208

Correct the predicted OGM of the current frame based on the measured OGM of the current frame, to obtain an OGM of the current frame

FIG. 2

FIG. 3

FIG. 4

| Receive a radar echo signal of a vehicle in a current frame | 501 |

| Obtain a first spectrum based on the radar echo signal | 502 |

| Determine, based on first energy information corresponding to each piece of first location information in the first spectrum, an occupation probability of a spatial location grid indicated by each piece of first location information, to obtain a measured OGM of the current frame | 503 |

| Determine a predicted OGM of the current frame based on pose data and movement information of the vehicle and an OGM of a previous frame of the current frame | 504 |

| Correct the predicted OGM of the current frame based on the measured OGM of the current frame, to obtain an OGM of the current frame | 505 |

FIG. 5

600

| Communication unit 601 | Processing unit 602 |

FIG. 6

700

| Processor 710 | Communication interface 730 |

| Memory 720 |

FIG. 7

## INTERNATIONAL SEARCH REPORT

| International application No. |
| --- |
| **PCT/CN2023/078706** |

| A. | CLASSIFICATION OF SUBJECT MATTER |
| --- | --- |

G01S13/89(2006.01)i;G01S13/56(2006.01)i

According to International Patent Classification (IPC) or to both national classification and IPC

| B. | FIELDS SEARCHED |
| --- | --- |

Minimum documentation searched (classification system followed by classification symbols)

G01S13/-: G01S7/-

Documentation searched other than minimum documentation to the extent that such documents are included in the fields searched

Electronic data base consulted during the international search (name of data base and, where practicable, search terms used)

CNTXT, ENTXTC, OETXT, VEN, WPABSC, CNKI, IEEE, 百度学术, BAIDU SCHOLAR: 华为技术有限公司; 刘志洋, 程治文, 羌波: 占据, 占用, 网格, 栅格, 地图, 概率, 功率, 强度, 能量, 幅度, 振幅, 距离, 方位, 多普勒, 速度, 傅里叶, 傅利叶, 雷达, 平移, 移位, 预测, 像素; occupa+, grid, map+, probability, power, intensity, strength, amplitude, range, distance, azimuth, angle, direction, Doppler, velocity, speed, FFT, radar, predict, IAA, DOA, pixel, shift+.

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2017269201 A1 (DENSO IT LABORATORY, INC.) 21 September 2017 (2017-09-21) description, paragraphs 67-118, and figures 4-6 and 9 | 1-14 |
| Y | CN 114646953 A (APTIV TECHNOLOGIES LIMITED) 21 June 2022 (2022-06-21) description, paragraphs 30-37, and figure 4 | 1-14 |
| A | US 2023022335 A1 (HYUNDAI MOBIS CO., LTD.) 26 January 2023 (2023-01-26) entire document | 1-14 |
| A | CN 113348422 A (HUAWEI TECHNOLOGIES CO., LTD.) 03 September 2021 (2021-09-03) entire document | 1-14 |
| A | JP 2019178971 A (PANASONIC IP MANAGEMENT CORP.) 17 October 2019 (2019-10-17) entire document | 1-14 |
| A | CN 112230193 A (SAMSUNG ELECTRONICS CO., LTD.) 15 January 2021 (2021-01-15) entire document | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 May 2023** | **26 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/078706** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2022261008 A1 (SONY GROUP CORP.) 18 August 2022 (2022-08-18)<br>entire document | 1-14 |
| A | KR 20230013764 A (RIDEFLUX INC.) 27 January 2023 (2023-01-27)<br>entire document | 1-14 |
| A | CN 110471064 A (GM GLOBAL TECHNOLOGY OPERATIONS LLC) 19 November 2019 (2019-11-19)<br>entire document | 1-14 |

Form PCT/ISA/210 (second sheet) (July 2022)

**INTERNATIONAL SEARCH REPORT**
Information on patent family members

International application No.

**PCT/CN2023/078706**

| Patent document cited in search report | | | Publication date (day/month/year) | Patent family member(s) | | | Publication date (day/month/year) |
|---|---|---|---|---|---|---|---|
| US | 2017269201 | A1 | 21 September 2017 | US | 10488507 | B2 | 26 November 2019 |
| | | | | JP | 2017166966 | A | 21 September 2017 |
| | | | | JP | 6239664 | B2 | 29 November 2017 |
| CN | 114646953 | A | 21 June 2022 | EP | 4027169 | A2 | 13 July 2022 |
| | | | | EP | 4027169 | A3 | 21 September 2022 |
| | | | | US | 2022196829 | A1 | 23 June 2022 |
| US | 2023022335 | A1 | 26 January 2023 | KR | 20230014344 | A | 30 January 2023 |
| CN | 113348422 | A | 03 September 2021 | US | 2020148215 | A1 | 14 May 2020 |
| | | | | US | 11465633 | B2 | 11 October 2022 |
| | | | | WO | 2020098456 | A1 | 22 May 2020 |
| | | | | EP | 3857326 | A1 | 04 August 2021 |
| | | | | EP | 3857326 | A4 | 01 December 2021 |
| JP | 2019178971 | A | 17 October 2019 | None | | | |
| CN | 112230193 | A | 15 January 2021 | KR | 20210001219 | A | 06 January 2021 |
| | | | | US | 2020408892 | A1 | 31 December 2020 |
| | | | | EP | 3757607 | A1 | 30 December 2020 |
| US | 2022261008 | A1 | 18 August 2022 | EP | 4043920 | A1 | 17 August 2022 |
| KR | 20230013764 | A | 27 January 2023 | None | | | |
| CN | 110471064 | A | 19 November 2019 | US | 2019346854 | A1 | 14 November 2019 |
| | | | | US | 11372424 | B2 | 28 June 2022 |
| | | | | DE | 102019110927 | A1 | 14 November 2019 |

Form PCT/ISA/210 (patent family annex) (July 2022)